(19) Europäisches Patentamt
European Patent Office
Office européen des brevets

(11) EP 1 808 680 A2

(12) **EUROPEAN PATENT APPLICATION**

(43) Date of publication:
**18.07.2007 Bulletin 2007/29**

(51) Int Cl.:
***G01J 3/50*** *(2006.01)*

(21) Application number: **07000365.2**

(22) Date of filing: **09.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **11.01.2006 JP 2006003308**

(71) Applicant: **OMRON CORPORATION Kyoto-shi, Kyoto 600-8530 (JP)**

(72) Inventors:
• **Kuriyama, Jun**
  **Shiokoji-dori, Kyoto-shi**
  **Kyoto 600-8530 (JP)**
• **Ishiba, Masato**
  **Shiokoji-dori, Kyoto-shi**
  **Kyoto 600-8530 (JP)**
• **Murakami, Kiyoshi**
  **Shiokoji-dori, Kyoto-shi**
  **Kyoto 600-8530 (JP)**

(74) Representative: **Kilian, Helmut**
  **Wilhelms, Kilian & Partner**
  **Patentanwälte**
  **Eduard-Schmid-Strasse 2**
  **81541 München (DE)**

(54) **Measuring method and apparatus using color images**

(57)    A method for correcting a color captured by a detector using a light source includes determining target reference color values corresponding to a plurality of groups each of which includes at least three reference colors; determining detected reference color values corresponding to the plurality of groups by capturing the emitted reference colors using the detector; calculating a plurality of sets of correction factors; and correcting the detected color value or the target color value to generate a corrected color value based on one of the sets of the correction factors.

FIG. 8

EP 1 808 680 A2

## Description

This application claims priority from Japanese Patent Application JP2006-003308 filed on January 11, 2006, which is hereby incorporated by reference in its entirety for all purposes.

TECHNICAL FIELD

The present disclosure relates generally to a measuring method and apparatus using color images.

BACKGROUND

Various electronic devices deal with colors. Example of such devices include digital cameras (including charge-coupled devices (CCDs) or complementary metal oxide semiconductor (CMOS) sensors as image input devices), and display monitors (including cathode ray tubes (CRTs), liquid crystal displays (LCDs), etc. as image output devices). In these devices, a "color" is typically expressed by gradation of red, green, and blue (RGB); or by gradation of hue, saturation, and luminance (HSL). Once the "real color" of a subject is captured by a camera with a color sensor, due to a number of electronic elements involved and/or the human eyes' nature, an "output color" tends to be different from the real color (i.e., the "input color") when reaching (i) the human eyes of an observer, or (ii) other electronic devices (whether hardware or software).

When displaying or processing a color image typically consisting of multiple picture elements (or pixels), color correction (or color calibration) for at least a part of the pixels is often made so that the output color of the pixel generated by the camera precisely reflects the real color conveyed to the human eyes, or electronic devices. For example, Japanese Patent Publication No. 2595927 describes a method for calibrating a color capturing system using multiple sensors and a color chart.

In view of the above, it would be desirable to provide improved color calibration for a system including a color sensor.

SUMMARY

The invention described herein provides a method for correcting a color captured by a detector using a light source. The method includes determining target reference color values corresponding to a plurality of groups each of which includes at least three reference colors; emitting the reference colors corresponding to the target reference color values by the light source; determining detected reference color values corresponding to the plurality of groups by capturing the emitted reference colors using the detector; calculating a plurality of sets of correction factors, each set of which maps relationships between the detected reference color values of each of the groups, and the target reference color values of each of the groups; by using the detector, determining a detected color value corresponding to a target point which is subsequently measured with respect to a target color value; and correcting the detected color value or the target color value to generate a corrected color value based on one of the sets of the correction factors.

The invention further provides a method for measuring. The method includes performing the above-identified method; and after performing the above-identified method, performing a measurement using the corrected color value.

The invention further provides an apparatus for correcting a color captured by a detector using a light source. The apparatus includes means for determining target reference color values corresponding to a plurality of groups each of which includes at least three reference colors; means for emitting the reference colors corresponding to the target reference color values by the light source; means for determining detected reference color values corresponding to the plurality of groups by capturing the emitted reference colors using the detector; means for calculating a plurality of sets of correction factors, each set of which maps relationships between the detected reference color values of each of the groups, and the target reference color values of each of the groups; means for, by using the detector, determining a detected color value corresponding to a target point which is subsequently measured with respect to a target color value; and means for correcting the detected color value or the target color value to generate a corrected color value based on one of the sets of the correction factors.

The invention further provides an apparatus for measuring. The apparatus includes means for performing the above-identified method; and means for, after performing the above-identified method, performing a measurement using the corrected color value.

These and other features and advantages of the invention will be described in more detail below with reference to associated drawings.

BRIEF DESCRIPTION OF THE DRAWINGS

The invention may best be understood by reference to the following description taken in conjunction with the accompanying drawings, which illustrate specific embodiments of the present invention. In the drawings, similar reference numerals/symbols correspond to similar elements.

FIG. 1 illustrates a schematic diagram of a substrate inspection device according to an example embodiment of the invention.

FIG. 2 illustrates an exemplary memory configuration.

FIG. 3 illustrates a setting example of the inspection area for an image to be processed.

FIGS. 4A-4C illustrate examples of color generation by LEDs.

FIG. 5 illustrates a part of a data structure of the correction factor table.

FIG. 6 illustrates a relationship between the inspection areas and the corresponding optimum groups.

FIGS. 7A and 7B illustrate specific examples of the above-mentioned selecting process.

FIG. 8 illustrates a teaching process for the inspection device having the above-mentioned configuration.

FIG. 9 illustrates an inspection flow for a single substrate to be inspected.

FIG. 10 illustrates characteristics of two cameras.

FIG. 11 illustrates an original color space, and a corrected color space.

FIGS. 12A and 12B illustrate a relationship between a correction factor matrix Q and an inverse matrix $Q^{-1}$ of the matrix Q used for the example embodiment.

DESCRIPTION OF EXAMPLE EMBODIMENTS

**Overview**

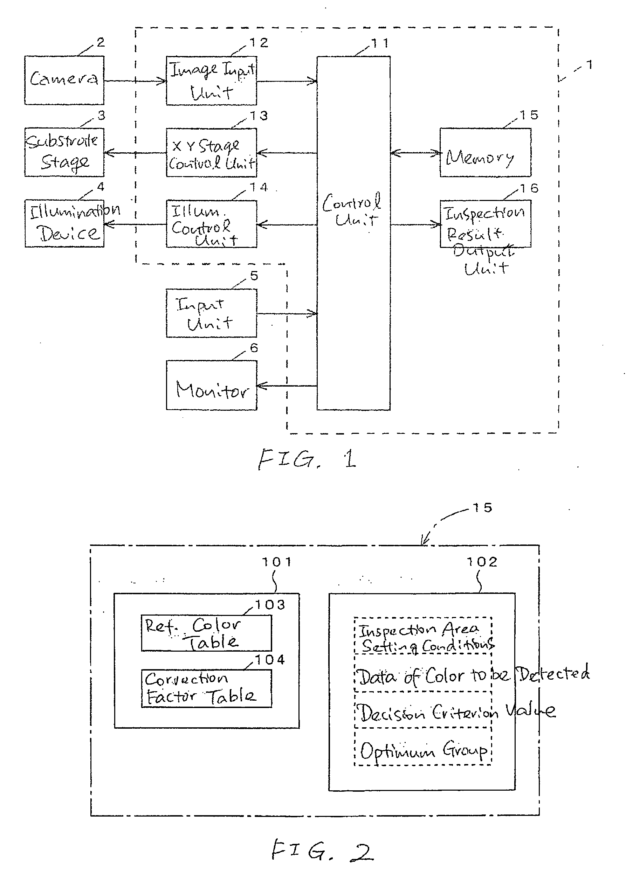

FIG. 1 illustrates a schematic diagram of a substrate inspection device according to an example embodiment of the invention. This substrate inspection device inspects, as an object to be processed, a substrate which has been subject to a component mounting process to check whether each component is properly mounted. The substrate inspection device includes a controller 1, a camera 2, a substrate stage 3, an illumination device 4, an input unit 5, a monitor 6, etc.

The camera 2 generates a color still image, and is positioned above the substrate stage 3 with a capturing plane facing down. The substrate stage 3 includes a table (not shown) for supporting the substrate to be inspected, and moving mechanisms (not shown) for moving the substrate stage 3 along the x direction (a longitudinal direction of the substrate), and the y direction (a width direction of the substrate). The illumination device 4 illuminates the substrate to be inspected, and, in this example embodiment, utilizes a device with red, green and blue LEDs (light emitting diodes) (not shown) being positioned in a ring configuration.

The controller 1 includes a control unit 11 implemented by a computer, an image input unit 12, an xy stage control unit 13, an illumination control unit 14, a memory 15, an inspection result output unit 16, etc.

The image input unit 12 includes an interface circuit and an A/D (analog/digital) conversion circuit for the camera 2. The xy stage control unit 13 controls movements of the substrate stage 3. The illumination control unit 14 controls on/off operations of each LED of the illumination device 4.

The memory 15 stores, other than a program describing a series of processes for the inspection, an inspection data file 102, and a color correction data file 101 as shown in FIG. 2. FIG. 2 illustrates an exemplary memory configuration.

The inspection data file 102 stores, for each component, setting conditions for an inspection area (a location of the area, a size of the area, etc.), data representing a color to be detected for the component, a decision criterion value for determining whether or not the measured result is proper, an optimum group of reference colors (described later in detail), etc. On the other hand, the color correction data file 101 provides two kinds of tables, namely, a reference color table 103, and a correction factor table 104.

The control unit 11 controls a position of the substrate stage 3 based on the program for the inspection, and positions a predetermined area of the substrate to the field of view of the camera 2. The control unit 11 then adjusts a quantity of light of the illumination device 4, allows the camera 2 to capture the image, receives the generated color image through the image input unit 12, and stores the image into an internal memory (e.g., a RAM (random access memory)). Then, with respect to this stored color image (hereinafter referred to as "an image to be processed"), the control unit 11 sets an inspection area for each component by using inspection data in the inspection data file 102, and performs a component extracting process, a measuring process, and a decision process for each area sequentially.

Once the decision processes with respect to all components on the substrate have been completed, the control unit 11 decides whether the substrate is passed or failed (i.e., rejected) by considering these decision results. This final decision result, and information regarding the rejected parts if any are provided to the inspection result output unit 16, and then, are output from the inspection result output unit 16 to an external device which are not shown.

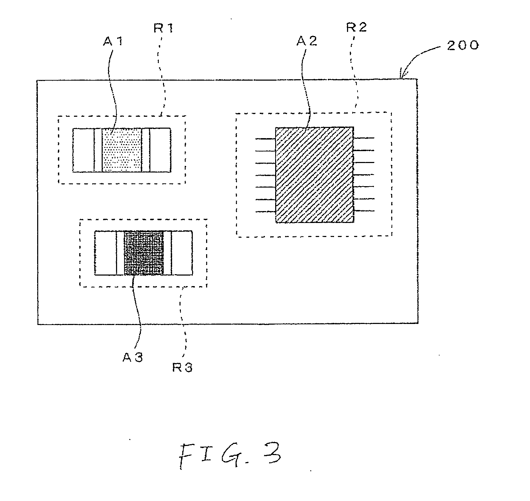

FIG. 3 illustrates a setting example of the inspection area for an image to be processed. It is noted that the image to be processed 200 in this example corresponds to a portion of the substrate. In this example embodiment, for each of components A1, A2, and A3, inspection areas R1, R2, and R3 each covering the entirety of the corresponding component is used. For each of the inspection areas R1, R2, and R3, data representing colors to be detected is predetermined based on colors of body portions of the components A1, A2, and A3. Although FIG. 3 shows three representative components A1-A3, it is noted that the number of the components in the image to be processed 200 can be any suitable number.

When inspecting, for each of the components A1, A2, and A3, the inspection areas R1, R2, and R3 are set based on the setting conditions registered in the inspection data file 102, and data representing a color to be detected for each of the components A1, A2, and A3 is read from the inspection data file 102. The image within each of the inspection areas R1, R2, and R3 is digitized by the data representing a color to be detected, thereby sensing the body portions of the components A1, A2, and A3. Further, with respect to the detected component, a location, an area, a direction of a main axis, etc. of the component is measured, and compared with the decision criterion value to decide whether or not a correct component is properly mounted.

In addition, in this inspection device of the example embodiment, colors within the inspection areas R1, R2, and R3 are corrected before performing the sensing process of the components. The two kinds of the tables 103 and 104 in the color correction data file 101 are used for this correcting process, and may be registered before the inspection data file 102 is registered. The optimum group in the inspection data file 102 is used as an index for selecting the most suitable set of the correction factors with respect to each inspection area. Specific contents of the tables 103 and 104 in the color correction data file 101, and the optimum group, and a setting method for the data are described below.

**(1) Reference color table 103**

In this example embodiment, seven colors, i.e., white, red, green, blue, yellow, magenta, and cyan, are used as "reference colors." A desired value set (or the "target" value set) of R (red), G (green), and B (blue) gradations (hereinafter referred to as "RGB values") which constitute each reference color is registered in the reference color table 103 beforehand. For example, when representing color data in 256 gray levels for each of RGB values, R=200, G=200, and B=200 are registered as the target value set of RGB values for white, and R=200, G=0, and B=0 are registered as the target value set of RGB values for red, etc. Hereinafter, the "desired (target) value set" of the RGB values for each reference color is referred to as "desired data" for the reference color, or "target reference color values." In other words, "desired (target) color data of the reference colors" is color data representing ideal colors of the reference colors, and may be expressed in various color spaces identified in the following paragraph.

The "reference color" is a color which is used for calculation of correction factors for color correcting processes (described in detail later). Its tone is not limited to a specific color, and any suitable number of the reference colors may be utilized. For example, white, black, red, green, blue, and halftones located between these colors (e.g., cyan, magenta, etc.) may be used as reference colors. When capturing an image, each reference color may be separately captured by using a calibration board, for example. Alternatively, reference colors may be simultaneously captured by using a color chart. In addition, instead of dedicated tools like a calibration board or a color chart, light sources which have stabilized emission wavelengths (e.g., LEDs (light emission diodes)) may be used for each of RGB lights. Selection of the light sources which are turned on, or adjustments to the time period during which the light sources are turned on may generate each reference color by illuminating a white board by such light sources.

The color data corresponding to each reference color is represented by, for example, gradations of RGB. However, the color data is not limited to the RGB system, but may be represented in a CMY (cyan, magenta, yellow) space, a CMYK (cyan, magenta, yellow, key plate) space, an XYZ space, an L*a*b* space, and an HSV (hue, saturation, value) space.

In addition, in this example embodiment, the RGB values with respect to each of the seven reference colors are measured from the color image generated by the camera 2, and the measured data is also registered.

As a method for retrieving the measured data for the seven reference colors, in this example embodiment, a white plate (not shown) is provided on the substrate stage 3. Illumination light of each reference color (hereinafter, referred to as "reference color light") is sequentially generated by using the illumination device 4, and illuminated onto the white plate. The image of the white plate under this illumination is captured by the camera 2, thereby generating a color image corresponding to each reference color.

Before retrieving the measured data, in this example embodiment, the illumination device is adjusted. An emitted wavelength of a monochromatic (or single color) LED is relatively stable. In addition, the emitted wavelength is further stabilized by regulating the driving current. In this example embodiment, by utilizing this characteristic, the driving current of each LED is adjusted beforehand so that white light is generated when each of red, green and blue LEDs is turned on by the same time period. After the adjustment, a selected one of the LEDs is turned on with the adjusted driving currents being maintained the same, thereby generating each reference color in a stable manner.

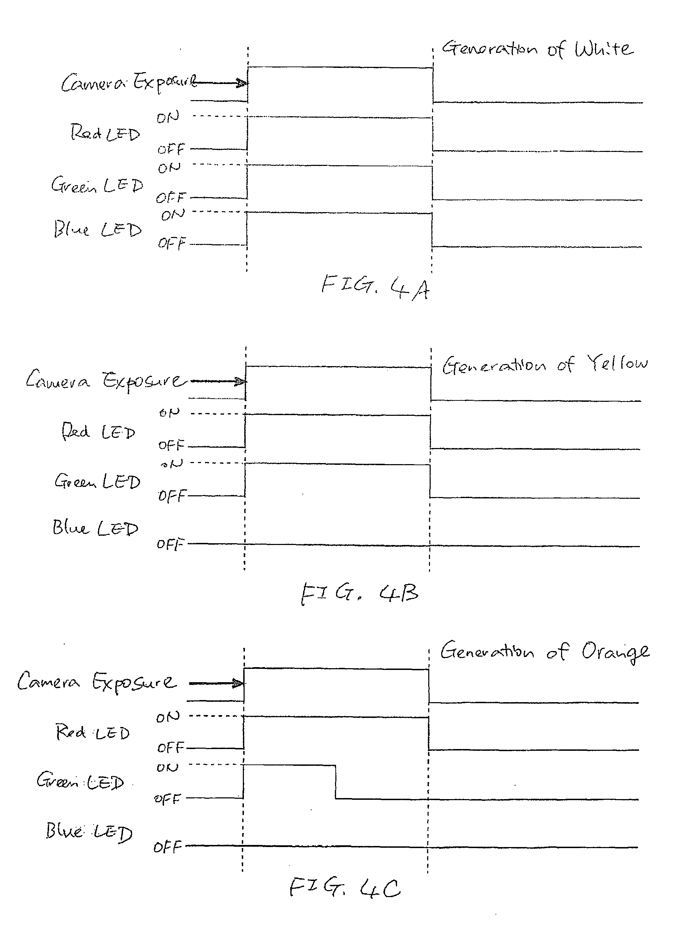

FIGS. 4A-4C specifically illustrate a method for capturing by generating each reference color in order to obtain the measured data for each reference color. In this example embodiment, the LEDs are turned on when exposure of the camera 2 is started. The colors to be captured by the camera 2 are changed by selecting the emitting LEDs, and/or by adjusting the time period of light emission.

FIGS. 4A-4C illustrate examples of color generation by LEDs.

When generating the white reference color light, as shown in FIG. 4A, each of the red, green, and blue LEDs is turned on during the exposure time period of the camera 2. When generating red, green, and blue reference color lights, an LED which corresponds to the reference color light is turned on during the exposure time period.

When generating the yellow, magenta, and cyan reference color lights, as shown in FIG. 4B, two of the red, green, and blue LEDs are selected to be turned on. FIG. 4B shows an example of generating the yellow reference color light. Similarly, the magenta reference color light is generated by selecting the red and blue LEDs. The cyan reference color light is generated by selecting the green and blue LEDs.

When a halftone color other than yellow, magenta, and cyan is used as a reference color, such a halftone reference color light is generated by shortening a turn-on time period of a predetermined LED than the exposure time period. As shown in the example of FIG. 4C, a halftone (i.e., orange) which is between red and yellow is generated by setting the turn-on time period of the red LED to be the same as the exposure time period, and by setting the turn-on time period of the green LED to be half of the exposure time period.

The controller 1 of this example embodiment receives selection of the reference colors via the input unit 5, then drives the camera 2 and the illumination device 4 to sequentially generate the selected reference color light, and captures the image. Every time the image is captured, the RGB values of the generated color image are measured. The measured data (i.e., the RGB values) is registered by associating the data with the corresponding reference color in the reference color table. By utilizing this method, the measured data of each reference color is efficiently obtained. Since there is no need to use a calibration board or a color chart, the cost for such use is eliminated. However, the method for obtaining the measured data of each reference color is not limited to the above-mentioned method, and thus, a method for using a calibration board or a color chart may be adopted.

**(2) Correction Factor Table 104**

The correction factor table 104 includes a plurality of groups each of which includes three reference colors. Each group is associated with a correction factor matrix for a color correcting process (hereinafter, referred to as a "correction factor matrix").

FIG. 5 illustrates a part of a data structure of the correction factor table 104. In FIG. 5, G1-G5, etc. represent groups. Hereinafter, these groups G1-G5, etc. are referred to as "reference color groups." Each of Q1-Q5, etc. represents a matrix which is constituted by correction factors for correcting the RGB values of the image to be processed, thereby generating target (or desired) values. Hereinafter, these matrices Q1-Q5, etc. are referred to as "correction factor matrices."

In this example embodiment, once the measured data of the reference colors has been registered in the reference color table 103, reference color groups are automatically generated by combining any three of the registered reference colors. In this example embodiment, the number of the reference colors is seven, and thus, the number of the groups would be $_7C_3$, i.e., 35.

Then, for each registered reference group, correction factors a, b, c, d, e, f, g, h, and i are calculated based on the following expression (1) or (2) by using the reference color data belonging to that group. The correction factor matrices Q1-Q5, etc. are constituted by these correction factors.

$$\begin{pmatrix} R0 \\ G0 \\ B0 \end{pmatrix} = \begin{pmatrix} a & b & c \\ d & e & f \\ g & h & i \end{pmatrix} \begin{pmatrix} R1 \\ G1 \\ B1 \end{pmatrix} \text{ --- (1)}$$

$$P0 = Q \cdot P1 \text{ --- (2)}$$

The expression (1) represents a relationship between the "detected" color values (R1, G1, B1) and the "target" color values (R0, G0, B0) for a set of three reference colors. In the example embodiment, the detected color values are typically actual sensed color values, or raw (uncorrected) color values. By contrast, the target color values are what are expected to be obtained after color correction, or proper (or ideal) corrected color values. The expression (2) is a simplified form of the expression (1) where P0, P1, and Q represent the target color data, the detected color data, and the correction factor matrix, respectively.

An inverse matrix may be used to obtain "detected" color values based on "target" color values as shown in expression (3) or (4) below.

$$\begin{pmatrix} R1 \\ G1 \\ B1 \end{pmatrix} = \begin{pmatrix} a & b & c \\ d & e & f \\ g & h & i \end{pmatrix}^{-1} \begin{pmatrix} R0 \\ G0 \\ B0 \end{pmatrix} \text{ --- (3)}$$

$$P1 = Q^{-1} \cdot P0 \text{ --- (4)}$$

The expression (4) is a simplified form of the expression (3) where P0, P1, and $Q^{-1}$ represent the target color data, the detected color data, and an inverse matrix of the correction factor matrix Q, respectively.

In a process for calculating the correction factors a-i, the detected color values, and the target color values corresponding to the three reference colors included in the reference color group are simultaneously substituted in the expression (1) to obtain the factors a-i.

For example, for the reference color group of three colors, namely, white, red, and yellow, suppose that white, red, and yellow target color values are (200, 200, 200), (200, 0, 0), and (200, 200, 0), respectively, and white, red, and yellow detected color values are (200, 200, 200), (200, 10, 0), and (200, 190, 0), respectively. For each reference color, target and detected values are substituted in the expression (1), thereby obtaining a=1, b=0, c=0, d=-0.05, e=1.111, f=-0.0555, g=0, h=0, i=1.

In an ideal situation where the detected color values are exactly the same as what are expected (i.e., target color values), Q and $Q^{-1}$ are both identity (or unit) matrices.

According to the correction factor table 104 shown in FIG. 5, a suitable set of the correction factors can be utilized for reference colors belonging to the reference color group, or colors which are close to the reference colors for each reference color group. FIG. 6 illustrates a relationship between the inspection areas and the corresponding optimum groups. As shown in FIG. 6, the optimum group in the inspection data file 102 represents a reference color group which is most suitable for color correction of the component color to be detected within the inspection area, with respect to each inspection area R1, R2, R3, etc.

When selecting the optimum group, with respect to all reference colors registered in the correction factor table 104, similarity to the color to be detected is first determined. Then, three most similar reference colors in the order of close similarity are selected. A reference color group constituted by such three reference colors is identified as an "optimum group" most suitable for the color to be detected. However, if there is no optimum group which is constituted by the most suitable three reference colors, then another optimum group which is constituted by three reference colors which are next to such most suitable colors may be utilized as the optimum group.

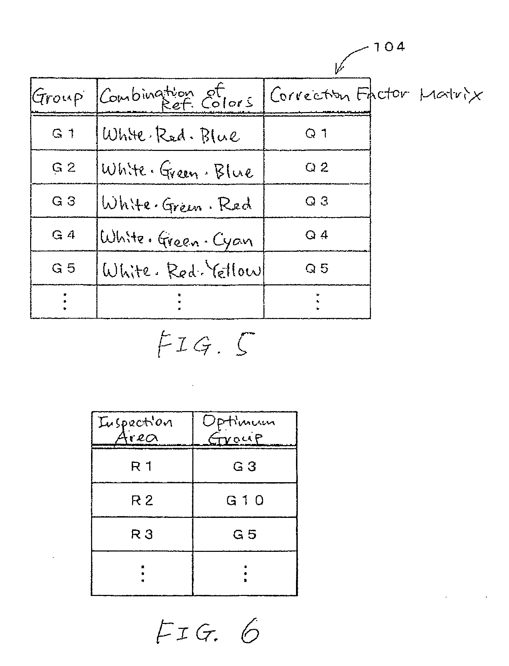

FIGS. 7A and 7B illustrate specific examples of the above-mentioned selecting process. As a degree of similarity, a distance (or a degree of proximity) in a color space having hue and saturation as two axes is utilized in FIG. 7A. In FIG. 7B, a distance (or a degree of proximity) in a color space having RGB values as three axes is utilized. In both color spaces, a point C corresponds to a color to be detected. As such, similarity with respect to the color to be detected increases as the distance from the point C decreases.

When the color space of FIG. 7A is used, with respect to the seven reference colors, their target data is converted to coordinates in the color space, and is registered. With respect to the color to be detected, the coordinates of the point C are calculated from the color to be detected. The distance between each registered reference color, and the point C is calculated.

When the color space of FIG. 7B is used, each reference color is plotted in the coordinates based on the RGB values of the target (desired) data. The point C is positioned in the coordinates based on the RGB values of the color to be detected. The distance between each reference color, and the point C is calculated.

In FIGS. 7A and 7B, the point C represents a predetermined color to be detected between red, yellow, and white. Three colors are selected among the reference colors in the ascending order of the distance from the point C. In both color spaces, red, yellow, and white are selected. Accordingly, the group G5 shown in FIG. 5 is identified as the optimum group corresponding to the color to be detected represented by the point C.

It is noted that color spaces for determining the similarity are not limited to the two color spaces shown in FIGS. 7A and 7B. Such color spaces may be any suitable color spaces in which different colors are plotted at different locations in the space.

In this example embodiment, with respect to all inspection areas, the above-mentioned method selects a reference color group which is most suitable for the color to be detected, and then, identifies the selected reference color group as an optimum group. When inspecting, for each inspection area, a correction factor matrix corresponding to the optimum group is read from the correction factor table. The color data (RGB values) in the inspection area is corrected by performing the expression (1) with the correction factors a-i substituted for the matrix.

For example, in the example of FIGS. 5 and 6, in order to correct the color data in the inspection area R3, the correction factor matrix Q5 corresponding to the optimum group G5 for the area R3 is used for calculation based on the expression (1). In this calculation, RGB values to be corrected (i.e., detected color values) are substitute for the R1, G1, and B1, thereby obtaining R0, G0, and B0, which are corrected RGB values (i.e., target color values).

According to the above-mentioned method, with respect to each inspection area, the color data within the area is corrected by using the correction factor matrix determined based on a combination of the reference colors which are closest to the color to be detected corresponding to the area. As such, colors of the component within the inspection area are corrected by optimum conditions (e.g., by using an optimum correction factor matrix), thereby allowing precise extraction of the component image.

In this example embodiment, the color to be detected is represented by a combination of specific RGB values. However, in an actual process, an upper limit value and a lower limit value are set for each of RGB values. In such a case, each of the RGB values of the colors to be detected is defined by the upper and lower limit values. In this case, for example, a suitable representative value between the upper and lower limit values for each of the RGB values is determined. The process described in connection with FIGS. 7A and 7B is performed by utilizing the representative RGB values as the origin from which the distance to each reference color is determined, in order to obtain the optimum group. A correction factor matrix corresponding to this optimum group may be used to correct the color data within the inspection area. Although the colors to be detected in this case have certain ranges, calculation of the optimum group based on the representative values is sufficiently precise since similar colors are to be processed by the same correction factor matrix in most cases.

FIG. 8 illustrates a teaching process for the inspection device having the above-mentioned configuration. This teaching process is performed by using a conforming (or non-defective) substrate on which components are properly mounted. First, at ST1 (or step 1), the conforming substrate is conveyed onto the substrate stage 3, and captured by the camera 2. A color image of the conforming substrate generated by this image capture is displayed on the monitor 6. Hereinafter, for each component included in this image, the process of ST2-ST8 is sequentially performed.

At ST2, setting of the inspection area for the component is performed. In this example embodiment, the system receives an instruction to designate two points on the image. The coordinates of such two points are regarded as an upper left corner and a lower right corner of the rectangular inspection area.

At ST3, the color to be detected is provisionally set. In this example embodiment, in response to an instruction to designate a point (e.g., a point where a color of the component is seen) within the inspection area, RGB values of the designated point are read, and displayed at a suitable location on the monitor 6. Then, the system receives an adjustment operation on the displayed color by the user. Here, the adjusted RGB values are provisionally set as the data of the color to be detected.

At ST4, an optimum group corresponding to the data of the color to be detected which has been provisionally set is selected. Specifically, according to the method described above referring to FIGS. 7A and 7B, similarity between the color to be detected, and each reference color is calculated. Then, three reference colors with the largest similarity are extracted in the ascending order of the similarity. Such three reference colors are regarded as an optimum group of the reference colors.

At ST5, a correction factor matrix corresponding to the optimum group is read from the correction factor table 104. The expression (1) for which correction factors in the matrix are substituted is used in order to correct the colors within the inspection area which is being processed. Further, the corrected image is displayed on the monitor 6.

The user can confirm that the corrected color reflects the actual color of the component by using the display screen. When the user determines that the corrected color is not appropriate, a cancel operation is triggered by the user. In such a case, the control at ST6 proceeds to the "NO" branch, and thus, returns to ST3, which allows a further adjustment on the color to be detected which has been provisionally set before.

Following these steps, processes of ST3-ST5 are performed until the user determines that the corrected color has become appropriate, and performs a confirm operation. Once such a confirm operation is performed, the system proceeds to the "YES" branch at ST6, and then, proceeds to ST7 at which the color to be detected, and the optimum group are identified, and associated with the inspection area to be corrected.

At ST8, a setting process of a decision criterion value for inspection is performed. In this example embodiment, the image has been corrected by the correction factors corresponding to the fixed optimum group, and the component is extracted by digitizing the corrected image based on the data of the color to be detected. Then, the location, the size of the area, and the direction of the main axis of the component is measured. These measured values are displayed on the monitor 6 to allow the user to designate an upper limit value, and a lower limit value for determining that the component is conforming.

Once the above processes are performed for all components, the control proceeds to the "YES" branch at ST9, and proceeds to ST10 where the inspection data file 102 which includes data which has been set in each of the above steps is generated, registered in the memory 15, and then, the teaching processes are completed.

Although not shown in FIG. 8, the image capture may be performed for multiple times. In such a case, the x, y coordinates of the substrate stage 3 each time when the image is captured are included in the inspection data file 102.

In the above example embodiment, adjusted (at the end of ST6) color data is used as the data of the color to be detected. However, such color data may be read from a library which contains registered target color data for each inspection area.

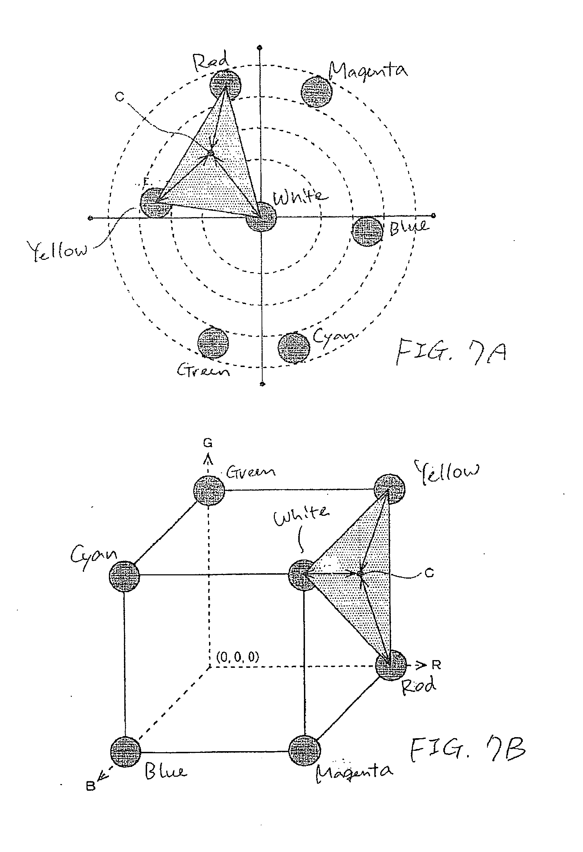

FIG. 9 illustrates an inspection flow for a single substrate to be inspected. Before this process, the control unit 11 reads the inspection data file 102 corresponding to the substrate to be inspected from the memory 15, and stores the data file 102 in a RAM (random access memory). At ST11 which is the first step, the substrate to be inspected is transferred onto the substrate stage 3, and the image of the substrate is captured by the camera 2.

Next, the inspection data regarding a first component is read from the inspection data file 102. The inspection area is set based on the setting conditions of the inspection area included in the data file 102. At ST13, the colors within the inspection area are corrected by the correction factors corresponding to the registered optimum group. At ST14, the corrected image is digitized by using the data of the color to be detected, thereby detecting the component. At ST15, the location, the size of the area, and the direction of the main axis of the component are measured with respect to the extracted component. At ST16, these measured values are compared with the corresponding decision criterion values in order to determine whether or not the mounting condition of the component is proper. The component detecting process at ST14 is not limited to digitizing, but may be, for example, extraction of pixels of which color difference with respect to the color to be detected is within a predetermined value.

After this, with respect to each inspection area, the processes of ST12-ST16 are performed. Once the processes for all inspection areas are completed, the control proceeds to the "YES" branch at ST17, and proceeds to ST18 where the decision result is output, and the inspection ends.

According to the processes shown in FIGS. 8 and 9, for each component to be inspected, a color correction process using correction factors which are suitable for the color of that component is performed, and thus, precision of the correction is improved, as compared to correction based on the same set of correction factors throughout the whole image. Therefore, the detecting process of components, and the measuring process later on are performed in a stable manner, thereby maintaining high precision of the inspection.

In the procedure of the inspection shown in FIG. 9, the colors within the inspection area are corrected by using the correction factor matrix, and then, the digitizing process is performed based on the color to be detected. Alternatively, the image within the inspection area does not have to be corrected. Instead, the color to be detected is corrected by using an inverse matrix of the correction factor matrix. Then, the uncorrected image within the inspection area is digitized by using the corrected color to be detected.

When correcting the image within the inspection area, correction of all pixels within the inspection area is necessary, and thus, a considerable number of the correction needs to be performed. However, when correcting the "color to be detected" (i.e., the target color, or the threshold color), correction of each pixel is not necessary, and thus, the process speed can be faster than the case where all pixels are corrected. In the case where the color to be detected is corrected, the image of the substrate to be inspected is not displayed in a way such an image is corrected to be actual colors.

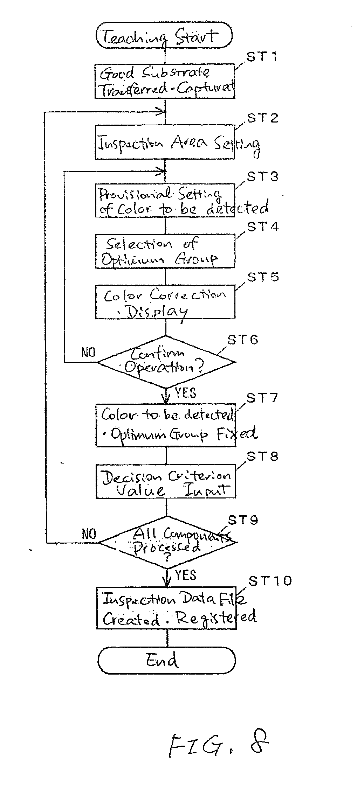

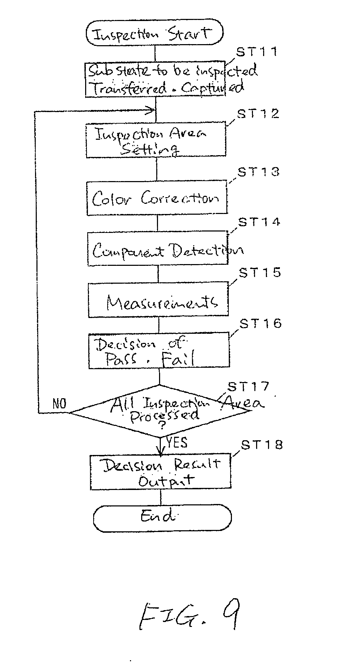

In the above-mentioned inspection device, the camera 2 uses a color camera having a configuration in which lights having wavelengths corresponding to RGB are incident onto three CCDs (charge coupled devices). However, the same kind of cameras may have variations in spectral characteristics. FIG. 10 illustrates characteristics of two cameras. For example, as shown in FIG. 10, the light having wavelength $\eta$ is detected only by a CCD for G (green) in the camera B, while such light is detected by a CCD for R (red) as well in the camera A. In other words, the light having the same wavelength $\eta$ may be detected as different colors in the camera A and B.

There may exist some variations in the characteristics of the illuminating system as well. In this manner, there are variations due to the camera and the illuminating system in conventional systems. As a result, since colors of images to be processed are different depending on the device, it has been difficult to use data of the color to be detected which has been set in one inspection device in another device. Consequently, although the inspection data file which was prepared for a specific inspection device can be reused in other devices, data of the color to be detected needs to be reconfigured.

However, according to the data configuration shown in FIG. 2, by configuring the reference color table 103, and the correction factor table 104 to be specific to the device, the inspection data file 102 which has been created for a specific inspection device may be transferable onto other devices. In such a case, for each inspection area, correction factors which are most suitable for the colors of the component within the inspection area in question are read from the correction factor table 104 based on each optimum group, and the color correcting process is performed. Further, since the correction factors read here are obtained based on measurement results of its own device, the most appropriate color correction is feasible, and thus, colors of components are reproduced accurately.

Accordingly, performing the process for retrieving the target data of the reference colors, and performing the process for creating the reference color table 103, and the correction factor table 104 enable use of the inspection data file 102 created in other devices by storing the data file 102 in the memory 15. As such, even though there are variations in characteristics of a camera or an illumination system, necessity to set the data of the color to be detected with respect to each inspection device would be eliminated, and labor for setting processes before inspection would be considerably reduced.

Retrieval of the inspection data file 102 into the device may be performed by a method for reading data files stored onto a recording medium such as a CD-ROM (compact disk - read only memory) using a disk drive (not shown), or by a method for downloading via a communication line. In such a case like this where the inspection data file is retrieved externally, the inspection data file 102 does not have to be created by the inspection device.

In addition, an inspection data file which does not include an optimum group of the reference colors may be retrieved. However, in this case, after retrieving the inspection data file, an optimum group needs to be obtained and registered according to the method shown in FIGS. 7A and 7B by using the colors to be detected within each inspection area stored in the retrieved file, and the reference color table 103 registered in its own device.

Further, the above-described embodiment deals with a substrate on which components are mounted as an object to be processed. However, any suitable objects other than substrates, of which colors to be inspected are not determined uniquely may be processed using a similar method according to the example embodiment. In addition, in the object to be processed in the example embodiment, the color to be detected can be identified within each inspection area. However, in the case of the object such as wrapping paper, printed materials or textile fabric which includes mixed multiple colors, it may be desirable to determine the color separately from each other. In such a case, the color to be detected is set with respect to each color, and an optimum group of each color to be detected is obtained beforehand. Then, each color to be detected is corrected by using correction factors in the corresponding optimum group, and then, the corrected color to be detected is applied to the image to be processed in order to detect each color.

In the example embodiment, an inspection area including the target portion to be inspected or measured has a specific location or size for each target portion. Alternatively, such an inspection area may be arbitrarily selected within a color image, or may be the whole area of the color image.

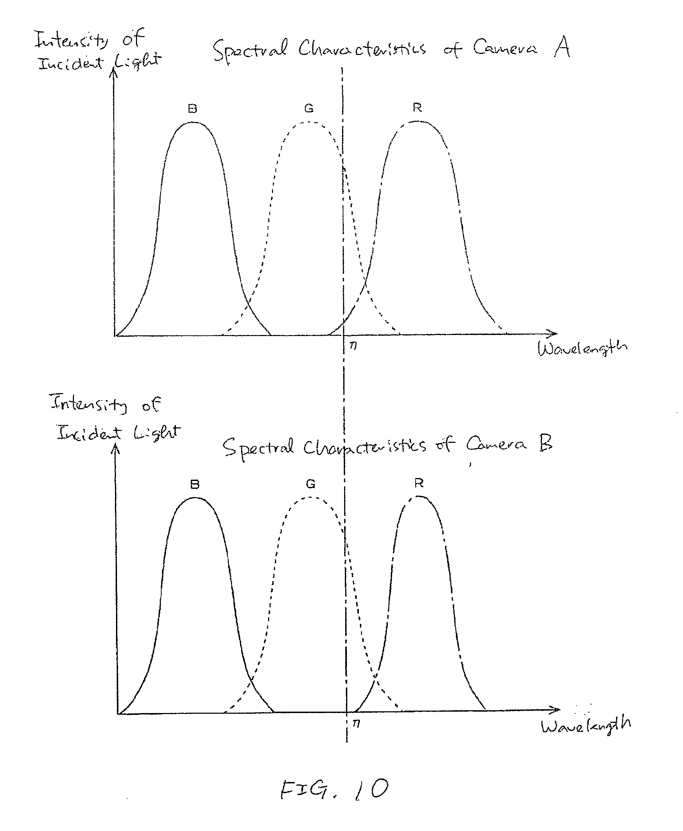

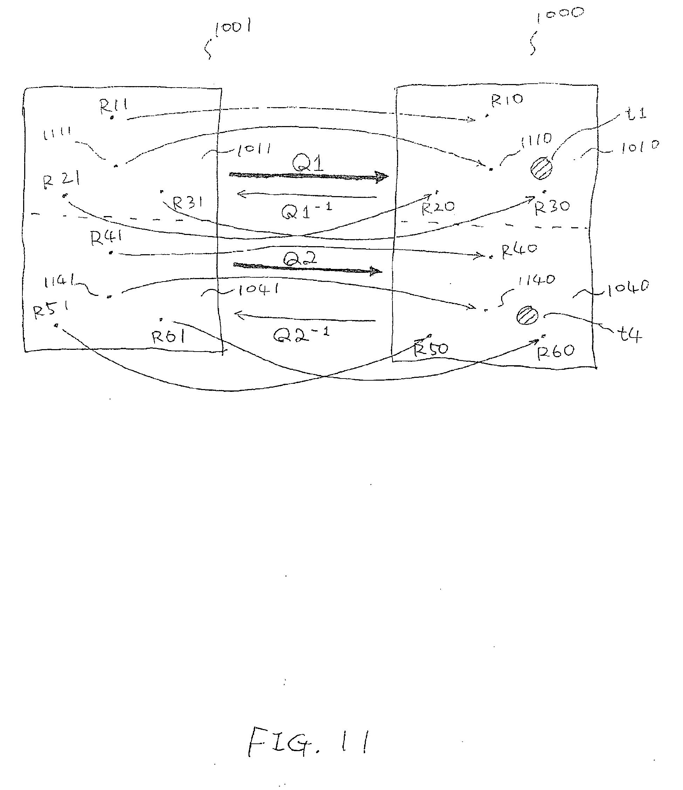

The example embodiment of the present invention may be summarized as follows referring to FIG. 11. FIG. 11 illustrates an original color space, and a corrected color space. The original color space 1001 is divided into two subspaces 1011 and 1041. The corrected color space 1000 is divided into two subspaces 1010 and 1040. The subspace 1011 is converted to the subspace 1010 by a correction factor matrix Q1 (typically a 3x3 matrix). The subspace 1041 is converted to the subspace 1040 by a correction factor matrix Q2 (typically a 3x3 matrix). Matrices $Q1^{-1}$ and $Q2^{-1}$ represent inverse matrices of Q1 and Q2, respectively.

Reference colors R11, R21, and R31 represent the subspace 1011. Reference colors R41, R51, and R61 represent the subspace 1041. The correction factor matrix Q1 converts the original subspace 1011 to the corrected subspace 1010. The correction factor matrix Q2 converts the original subspace 1041 to the corrected subspace 1040. Specifically, the correction factor matrix Q1 converts the reference colors R11, R21, and R31 in the subspace 1011 to reference colors R10, R20, and R30 in the subspace 1010. The correction factor matrix Q2 converts the reference colors R41, R51, and R61 in the subspace 1041 to reference colors R40, R50, and R60 in the subspace 1040.

According to the example embodiment of the invention, if a color to be detected (or a target color) t1 is closer to the reference colors R10, R20, and R30 than the reference colors R40, R50, and R60 , then a detected (raw or uncorrected) color 1111 is converted to a corrected color 1110 by the correction factor matrix Q1. Alternatively, if a color to be detected (or a target color) t4 is closer to the reference colors R40, R50, and R60 than the reference colors R10, R20, and R30, then a detected (raw or uncorrected) color 1141 is converted to a corrected color 1140 by the correction factor matrix Q2.

The corrected color 1110 is compared with the target color t1 to determine if the corrected color 1110 meets the target color t1 (e.g., sufficiently close to the target color t1). The corrected color 1140 is compared with the target color t4 to determine if the corrected color 1140 meets the target color t4 (e.g., sufficiently close to the target color t4).

According to the example embodiment of the invention, a detected color (e.g., one of 1111 and 1141) is corrected by one of a plurality of correction factor matrices (e.g., one of Q1 and Q2) depending on the target color (e.g., one of t1 and t2). If the target color is closer to the subspace 1010 which is represented by the reference colors R10, R20, and R30, then the correction factor matrix Q1 is utilized for the correction. Alternatively, if the target color is closer to the subspace 1040 which is represented by the reference colors R40, R50, and R60, then the correction factor matrix Q2 is utilized for the correction.

As appreciated by those skilled in the art, the number of the subspaces may be any suitable number more than one. In the case of FIG. 11, the number of the subspaces is two. However, if a color space is divided into four subspaces, then four corresponding correction factor matrices can be used depending on the target color's location in the color space. In some cases, multiple subspaces can be overlapped with each other.

There are many ways to decide which one of the multiple correction factor matrices is used. One example is discussed in the preceding paragraphs. Specifically, an optimum group including three reference colors which are closest to the target color (or the color to be detected) is selected. A correction factor matrix corresponding to the selected optimum group is used for the correction of the color.

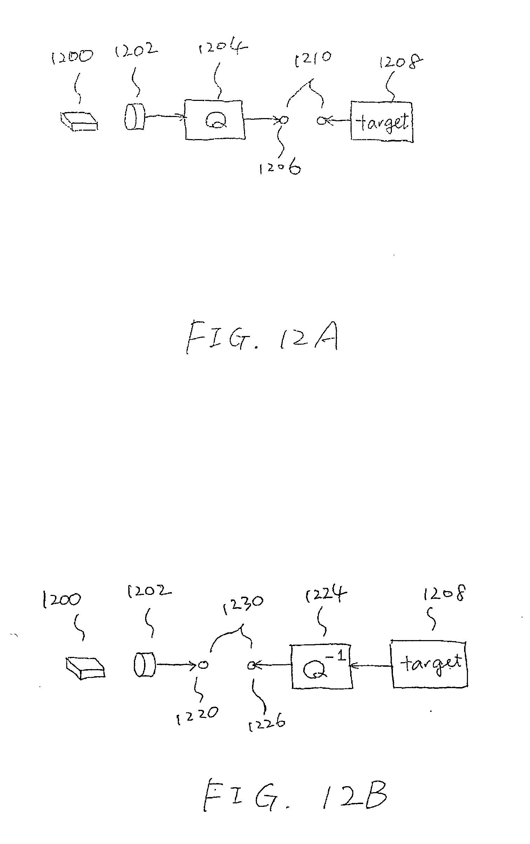

FIGS. 12A and 12B illustrate a relationship between a correction factor matrix Q and an inverse matrix $Q^{-1}$ of the matrix Q used for the example embodiment. As described in detail above, in a system of FIG. 12A, an image of an objected to be inspected 1200 is captured by a camera 1202. A captured color in the image is corrected (1204) by the correction factor matrix Q to generate a corrected color 1206. To determine if the corrected color meets the criterion, a target color 1208 is provided. By comparing (1210) the corrected color 1206 with the target color 1208, the system determines if the color 1206 meets the criterion 1208.

Alternatively, in a system of FIG. 12B, an image of the objected to be inspected 1200 is captured by the camera 1202 to generate a raw color 1220. The captured, but uncorrected color 1220 in the image is used for the subsequent comparison. The target color 1208 is corrected (1224) by an inverse matrix of the correction factor matrix $Q^{-1}$ to generate a corrected target color 1226. To determine if the raw color 1220 meets the corrected criterion 1226, comparison between the two colors is performed. By comparing (1230) the raw color 1220 with the corrected target color 1226, the system determines if the color 1220 meets the corrected criterion 1226.

## Conclusion

Although the foregoing invention has been described in some detail for purposes of clarity of understanding, it will be apparent that certain changes and modifications may be practiced without departing from the spirit and scope of the invention as defined in the claims. Further, features of the invention described herein may be provided alone or in any combination.

## Claims

1. A method for correcting a color captured by a detector using a light source comprising:

   determining target reference color values corresponding to a plurality of groups each of which includes at least three reference colors;
   emitting the reference colors corresponding to the target reference color values by the light source;
   determining detected reference color values corresponding to the plurality of groups by capturing the emitted reference colors using the detector;
   calculating a plurality of sets of correction factors, each set of which maps relationships between the detected reference color values of each of the groups, and the target reference color values of each of the groups;
   by using the detector, determining a detected color value corresponding to a target point which is subsequently measured with respect to a target color value; and
   correcting the detected color value or the target color value to generate a corrected color value based on one of the sets of the correction factors.

2. The method of claim 1, wherein which one of the sets of the correction factors is used is determined based on proximity of the target color value in a color space.

3. The method of claim 1, wherein which one of the sets of the correction factors is used in order to correct the captured color to generate the corrected color is determined based on an input provided externally by a user.

4. The method of claim 1, wherein the reference color values, and the detected reference color values are represented by at least one selected from a group consisting of an RGB (red, green, blue) space, a CMY (cyan, magenta, yellow) space, a CMYK (cyan, magenta, yellow, key plate) space, an XYZ space, an L*a*b* space, and an HSV (hue, saturation, value) space.

5. A method for measuring comprising:

   performing the method of claim 1; and
   after performing the method of claim 1, performing a measurement using the corrected color value.

6. An apparatus for correcting a color captured by a detector using a light source comprising:

   means for determining target reference color values corresponding to a plurality of groups each of which includes at least three reference colors;
   means for emitting the reference colors corresponding to the target reference color values by the light source;
   means for determining detected reference color values corresponding to the plurality of groups by capturing the emitted reference colors using the detector;
   means for calculating a plurality of sets of correction factors, each set of which maps relationships between the detected reference color values of each of the groups, and the target reference color values of each of the groups;
   means for, by using the detector, determining a detected color value corresponding to a target point which is subsequently measured with respect to a target color value; and
   means for correcting the detected color value or the target color value to generate a corrected color value based on one of the sets of the correction factors.

7. The apparatus of claim 6, wherein which one of the sets of the correction factors is used is determined based on proximity of the target color value in a color space.

8. The apparatus of claim 6, wherein which one of the sets of the correction factors is used in order to correct the captured color to generate the corrected color is determined based on an input provided externally by a user.

9. The apparatus of claim 6, wherein the reference color values, and the detected reference color values are represented by at least one selected from a group consisting of an RGB (red, green, blue) space, a CMY (cyan, magenta, yellow) space, a CMYK (cyan, magenta, yellow, key plate) space, an XYZ space, an L*a*b* space, and an HSV (hue, saturation, value)

**EP 1 808 680 A2**

space.

10. An apparatus for measuring comprising:

means for performing the method of claim 1; and means for, after performing the method of claim 1, performing a measurement using the corrected color value.

FIG. 1

FIG. 2

FIG. 3

Generation of White

Camera Exposure →

Red LED  ON / OFF

Green LED  ON / OFF

Blue LED  ON / OFF

**FIG. 4A**

Generation of Yellow

Camera Exposure →

Red LED  ON / OFF

Green LED  ON / OFF

Blue LED  OFF

**FIG. 4B**

Generation of Orange

Camera Exposure →

Red LED  ON / OFF

Green LED  ON / OFF

Blue LED  OFF

**FIG. 4C**

EP 1 808 680 A2

104

| Group | Combination of Ref. Colors | Correction Factor Matrix |
|---|---|---|
| G 1 | White · Red · Blue | Q 1 |
| G 2 | White · Green · Blue | Q 2 |
| G 3 | White · Green · Red | Q 3 |
| G 4 | White · Green · Cyan | Q 4 |
| G 5 | White · Red · Yellow | Q 5 |
| ⋮ | ⋮ | ⋮ |

FIG. 5

| Inspection Area | Optimum Group |
|---|---|
| R 1 | G 3 |
| R 2 | G 1 0 |
| R 3 | G 5 |
| ⋮ | ⋮ |

FIG. 6

FIG. 7A

FIG. 7B

```
              ┌──────────────────┐
              │ Teaching Start   │
              └──────────────────┘
                       │
                       ▼
              ┌──────────────────┐  ST1
              │ Good Substrate   │
              │ Transferred·Captura│
              └──────────────────┘
                       │
                       ▼
              ┌──────────────────┐  ST2
              │ Inspection Area Setting │
              └──────────────────┘
                       │
                       ▼
              ┌──────────────────┐  ST3
              │ Provisional Setting │
              │ of Color to be detected │
              └──────────────────┘
              ┌──────────────────┐  ST4
              │ Selection of      │
              │ Optimum Group     │
              └──────────────────┘
              ┌──────────────────┐  ST5
              │ Color Correction  │
              │ ·Display          │
              └──────────────────┘
                       │
                       ▼
         NO      ◇ Confirm ◇  ST6
        ◄────────◇ Operation? ◇
                       │ YES
                       ▼
              ┌──────────────────┐  ST7
              │ Color to be detected │
              │ ·Optimum Group Fixed │
              └──────────────────┘
                       │
                       ▼
              ┌──────────────────┐  ST8
              │ Decision Criterion │
              │ Value  Input      │
              └──────────────────┘
                       │
                       ▼
         NO      ◇ All Components ◇  ST9
        ◄────────◇ Processed? ◇
                       │ YES
                       ▼
              ┌──────────────────┐  ST10
              │ Inspection Data File │
              │ Created·Registered │
              └──────────────────┘
                       │
                       ▼
              ┌──────────────────┐
              │       End        │
              └──────────────────┘
```

FIG. 8

Inspection Start

ST11
Sub state to be inspected
Transferred · Captured

ST12
Inspection Area
Setting

ST13
Color Correction

ST14
Component Detection

ST15
Measurements

ST16
Decision of
Pass · Fail

ST17
All Inspection Area
Processed?

NO

YES

ST18
Decision Result
Output

End

FIG. 9

FIG. 10

FIG. 11

FIG. 12A

FIG. 12B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006003308 A
- JP 2595927 B